# EUROPEAN PATENT APPLICATION

(11) **EP 4 395 406 A1**
(43) Date of publication of application: **03.07.2024**
(21) Application number: 23220771.2
(22) Date of filing: 29.12.2023
(51) Int. Cl.: H04W 24/06, H04L 43/0817, H04L 43/50

(54) **SYNTHETIC TESTING**

(30) Priority: 30.12.2022 US 202263477964 P; 12.05.2023 US 202363501786 P; 22.12.2023 US 202318394991
(71) Applicant: Juniper Networks, Inc., Sunnyvale, CA 94089 (US)
(72) Inventor: WU, Xiaoying, Sunnyvale, 94089 (US); THOMAS, Jacob, Sunnyvale, 94089 (US); PURVIS, Wesley, Sunnyvale, 94089 (US); KATHARE, Gorakhanath, Sunnyvale, 94089 (US); SINGH, Gurpreet, Sunnyvale, 94089 (US)
(74) Representative: D Young & Co LLP

(57) **Abstract**

The disclosure describes one or more techniques for performing automated scheduling and/or orchestration of synthetic tests for network sites. For example, a network management system comprises a memory and one or more processors in communication with the memory and configured to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.

## Description

### PRIORITY

This application claims the benefit of US Patent Application No. 18/394,991, filed 22 December 2023, and claims the benefit of US Provisional Patent Application No. 63/501,786, filed 12 May 2023, and US Provisional Patent Application No. 63/477,964, filed 30 December 2022, the entire content of each application is incorporated herein by reference.

### TECHNICAL FIELD

The disclosure relates generally to computer networks and, more specifically, to monitoring and troubleshooting computer networks.

### BACKGROUND

Commercial premises or sites, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

### SUMMARY

Particular aspects are set out in the appended independent claims. Various optional embodiments are set out in the dependent claims.

In general, this disclosure describes one or more techniques for performing automated scheduling and/or orchestration of synthetic tests for network sites. For example, a network system may include a network management system (NMS) configured to manage wireless networks at one or more of the sites. The NMS may include a synthetic testing module that is configured to determine when and/or which devices to perform synthetic tests, either proactively and/or reactively, to determine the performance of the network within the network sites. For example, the synthetic testing module may identify optimal testing periods or identify one or more devices that may perform testing without disruption to the network at higher usage periods, and orchestrate synthetic tests to be performed by the one or more devices (e.g., access points (APs) or switches) at the network site. In some examples, the synthetic testing module may instruct one or more devices at the network site to proactively test for issues in the network in the early morning hours before the workday begins to ensure that a network is healthy and ready (or can be remedied to be ready) to accept users for the day. The synthetic testing module may additionally, or alternatively, instruct one or more devices at the network site to reactively test for issues in the network to confirm a previously detected issue.

In some examples, the synthetic testing module is configured to identify and react to certain network conditions to perform a synthetic test on one or more network devices at the network site. For example, the synthetic testing module may determine a period of time at which there is minimal or no client activity (low client device traffic, low number of connected client devices) to perform a synthetic test. This period of time is referred to as a "lull period." Based on the lull period, the synthetic testing module may determine a suggested period of time at which to perform one or more tests. This suggested period of time is referred to as a "synthetic test time window." In response to determining the synthetic test time window, the synthetic testing module may instruct one or more network devices to perform the synthetic test during the synthetic test time window. In some examples, the synthetic testing module may select one or more particular devices at the network site that may perform the synthetic test with minimal impact to the customer's network infrastructure or the network service provider's cloud infrastructure, referred to herein as a "synthetic test scope." For example, the synthetic testing module may identify a minimal number of network devices to perform the synthetic test during the synthetic test time window and/or identify one or more network devices that have limited or no load (e.g., low client device traffic, low number of connected client devices to the AP) to perform the synthetic test. The synthetic testing module may determine the synthetic test scope based on the network topology, neighboring relationships between APs, and/or wireless local area network (WLAN) and virtual local area network (VLAN) mapping of a wireless network. The synthetic testing module may, in some examples, instruct the one or more devices selected to perform the synthetic test to perform the synthetic test irrespective of the synthetic test time window. In some examples, the synthetic testing module may receive user input from an administrator to initiate an on-demand synthetic test.

The synthetic testing module may obtain data (e.g., test results data) resulting from the performance of the synthetic test by the one or more devices that may indicate an issue at the network site or confirm a previously detected issue at the network site. In response to receiving the data, the synthetic testing module is further configured to perform an action, such as sending a notification to an administrator of the network site indicating the detected issue and, in some cases, sending one or more suggested actions to remediate the issue and/or automatically taking corrective action to remedy the detected issue.

The techniques of this disclosure provide one or more technical advantages and practical applications. For example, by automatically scheduling and/or orchestrating synthetic tests, the testing may be performed during periods of low or no client device usage even without actual client device usage data that is typically used to test networks at one or more of sites. Additionally, by automatically scheduling and/or orchestrating synthetic tests to be performed during periods of low or no client device usage, testing does not have to be performed during periods of high client device usage, which would cause a disruption to the network. Moreover, the techniques described in this disclosure also enable the selection of a minimal number of devices to perform the tests or devices that have limited to no load, which has a smaller impact on the network infrastructure and reduces the risk of causing significant disruptions to the network.

In one example, the disclosure describes a network management system comprising: a memory; and one or more processors in communication with the memory and configured to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.

In another example, the disclosure describes a method comprising: determine, by a network management system (NMS), a network condition to perform a test based on data received from a plurality of network devices, wherein the network condition comprises one or more of a time window to perform the test or one or more network devices of the plurality of network devices to perform the test; instructing, by the NMS and based on the network condition, the one or more network devices to perform the test; identifying, by the NMS and based on data obtained from the one or more network devices that performed the test, an issue of the network; and performing, by the NMS, an action based on the identified issue.

In another example, the disclosure describes computer-readable media comprising instructions that, when executed, cause one or more processors to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system configured to perform automated scheduling and orchestration of synthetic tests for network sites, in accordance with one or more techniques of the disclosure.
FIG. 1B is a block diagram illustrating further example details of the network system of FIG. 1A.
FIG. 2 is a block diagram of an example access point device, in accordance with one or more techniques of this disclosure.
FIG. 3A is a block diagram of an example network management system, in accordance with one or more techniques of the disclosure.
FIG. 3B is a block diagram of an example synthetic testing module, in accordance with one or more techniques of the disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 illustrates an example orchestration of a synthetic test, in accordance with one or more techniques of this disclosure.
FIG. 7 illustrates an example of obtaining test result data \ from a particular network device that performed the synthetic test, in accordance with one or more techniques of this disclosure.
FIG. 8 is a flow chart illustrating an example operation of the network management system configured to perform automated scheduling and orchestration of synthetic tests for network sites based on certain network conditions, in accordance with one or more techniques of this disclosure.
FIG. 9 is a flow chart illustrating an example operation to provide scheduling of tests to avoid multiple tests from being performed concurrently, in accordance with one or more techniques of this disclosure.

### DETAILED DESCRIPTION

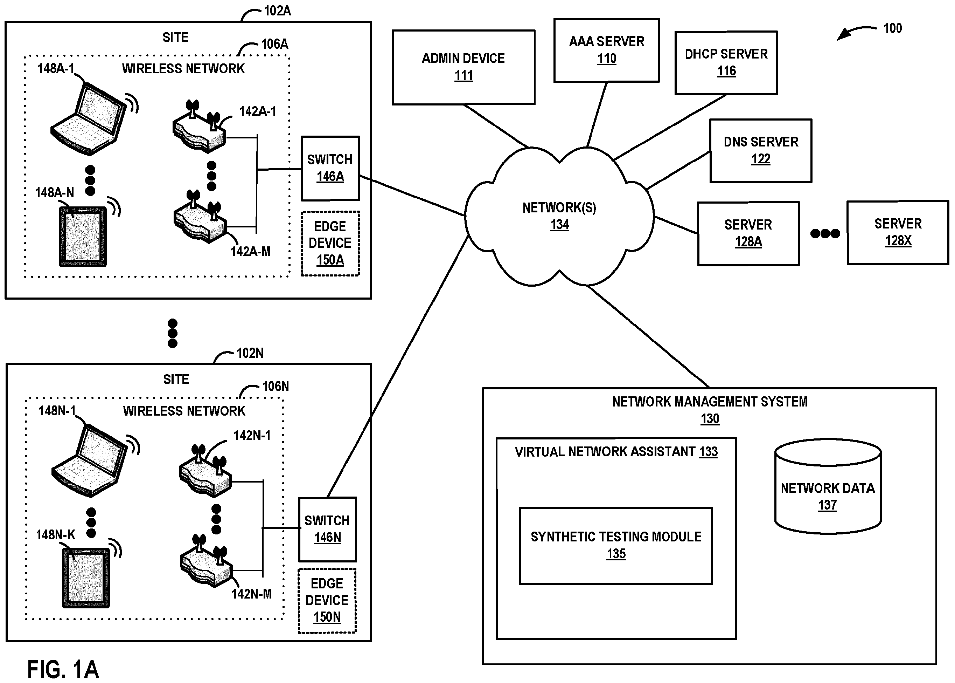

FIG. 1A is a block diagram of an example network system 100 including network management system (NMS) 130 configured to perform automated scheduling and orchestration of synthetic testing for network sites, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices, such as access points (APs) 142, switches 146, or routers (not shown). For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to a wired network and is capable of providing wireless network access to client devices within the site. References to "N" or "M" may represent any number. References to "N" for different elements need not be the same number. Similarly, references to "M" for different elements need not be the same number.

Each site 102A-102N also includes a plurality of client devices, otherwise known as user equipment devices (UEs), referred to generally as UEs or client devices 148, representing various wireless-enabled devices within each site. For example, a plurality of LTEs 148A-1 through 148A-N are currently located at site 102A. Similarly, a plurality of LTEs 148N-1 through 148N-M are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1A, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1A as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or LTEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128N (collectively "servers 128") (e.g., web servers, databases servers, file servers and the like), and a network management system (NMS) 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the NAS devices, e.g., APs 142, switches 146, or routers, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122 and/or 128, APs 142, LTEs 148, switches 146, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 110, 116, 122 and/or 128, APs 142, LTEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137, e.g., one or more service level expectation (SLE) metrics, received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 133 that implements an event processing platform for providing real-time insights and simplified troubleshooting for IT operations, and that automatically takes corrective action or provides recommendations to proactively address wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

In operation, NMS 130 observes, collects and/or receives network data 137, which may take the form of data extracted from messages, counters, and statistics, for example. In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

Typically, network management systems rely on actual client device usage data to test networks at one or more of sites. However, there is minimal to no actual client device usage data during periods of low or no client device usage (e.g., weekends and/or holidays) to be used to test the networks. In contrast, testing the networks during periods of high client device usage may disrupt the network. Moreover, testing is conventionally performed by each device in the network, which may disrupt the network for extended periods of time (e.g., hours) and/or have a large impact on the network infrastructure, which may have a higher risk of causing significant disruptions to the network.

In accordance with one or more techniques of this disclosure, NMS 130 is configured to perform automated scheduling and/or orchestration of synthetic tests for network sites. In this example, VNA 133 of NMS 130 includes synthetic testing module 135 that is configured to determine when and/or which devices to perform a synthetic test to detect or confirm issues within network system 100. In some examples, synthetic testing module 135 is configured to identify certain network conditions to perform a synthetic test on one or more network devices at network site 102A. As one example, synthetic testing module 135 may obtain network data 137 from network devices at network sites 102 that may include, for example, the number of UEs 148 actively connected to APs 142 at site 102 and/or usage data of LTEs 148 (e.g., amount of data traffic sent or received). Synthetic testing module 135 may determine a period of time at which there is minimal or no client activity (e.g., minimal or no LTEs 148 actively connected to APs or minimal or no data traffic sent or received). This period of time is referred to as a "lull period." Based on the lull period, synthetic testing module 135 may determine a suggested period of time at which to perform one or more tests. This suggested period of time is referred to as a "synthetic test time window." As is further described below, synthetic testing module 135 may input the network data (e.g., historical data of client activity) into a model (e.g., ML model) to determine a predicted synthetic test time window. The synthetic test time window may be determined for a given site. For example, a synthetic test time window for a particular site (e.g., 102A) may be different than a synthetic test time window for another site (e.g., 102N).

Synthetic testing module 135 may select one or more devices (e.g., UEs 148, APs 142, switches 146, servers 128, or other network devices, such as network access control (NAC) servers or systems, routers and/or gateways) to perform the test. For example, synthetic testing module 135 may identify, for example, a minimal number of network devices to perform a synthetic test to minimize the impact to the customer's network infrastructure or the network service provider's cloud infrastructure, referred to herein as a "synthetic test scope." To select one or more particular network devices to perform the synthetic test, synthetic testing module 135 may determine the synthetic test scope based on the network topology, neighboring relationships between APs, and/or WLAN and VLAN mapping of a wireless network. Synthetic testing module 135 may generate a graph representing one or more of the network topology, neighboring relationships between APs, and/or WLAN and VLAN mapping of a wireless network, and select one or more APs to perform the test based on the graph.

As one example, synthetic testing module 135 (or another module of NMS 130) may generate a graph representing a network topology of a site. The graph of the network topology may represent the uplink connections from APs 142 to a network hub (e.g., root node) for the site. For example, the graph of the network topology may include representations of uplink connections between APs 142 and access switches, uplink connections between the access switches and core switches, and uplink connections between the core switches and a network hub. Synthetic testing module 135 may perform a graph traversal of the graph of the network topology to determine network paths to the root (e.g., paths from each of APs 142 to the network hub) and to determine whether there are any overlapping network paths. Based on the determination of overlapping network paths, synthetic testing module 135 may select one or more APs (e.g., edge node(s) of the graph) to perform the test. For example, assume that three of APs 142A, (e.g., AP 142A-1, AP 142A-2, and AP 142A-3) are each connected to switch 146A at site 102A, which is connected to the network hub. In this example, synthetic testing module 135 may perform a graph traversal of the graph of the network topology of the uplink connections within site 102A to determine a path from each of APs 142A to the network hub. Synthetic testing module 135 may then determine AP 142A-1 through AP 142A-3 have overlapping network paths to the network hub. Based on the determination of the overlapping network paths, synthetic testing module 135 may select at least one of AP 142A-1 through AP 142A-3 to perform the test.

The graph may additionally, or alternatively, include a graph representing the neighbor relationships between APs 142. For example, the graph of the neighbor relationship may represent the APs 142 that have detected a signal from one or more neighboring APs. The graph of the neighbor relationships may be generated based on Received Signal Strength Indicator (RSSI) values (or any other information indicative of communication relationships between the APs). Synthetic testing module 135 may determine based on the graph of the neighbor relationships which APs are strong neighbors (e.g., higher RSSI values) and which APs are distant neighbors (e.g., lower RSSI values). The graph of neighbor relationships may include one or more groups of strong neighbors. Synthetic testing module 135 may select one or more APs from among each of the strong neighbors groups to perform the test.

The graph may additionally, or alternatively, include a graph representing the mapping of WLANs and VLANs of a site. Synthetic testing module 135 may determine, based on network data, the APs that are on each WLAN and the one or more VLANs associated with each WLAN. Assume for example site 102A has two WLANs, e.g., a guest WiFi network on a first set of one or more VLANs (e.g., VLAN A) and the corporate WiFi network on a second set of one or more VLANs (e.g., VLANs B, C, D, and E). In this example, a first set of one or more APs 142A (e.g., AP 142A-1 and AP 142A-4) may be on the guest WiFi network, a second set of one or more APs 142A (e.g., AP 142A-3 and AP 142A-6) may be on the corporate WiFi network, and a third set of one or more APs 142A (e.g., AP 142A-2 and AP 142A-4) may be on both the corporate WiFi network and guest WiFi network. Synthetic testing module 135 may select the AP and VLAN combinations that provide the fewest number of AP and VLAN combinations that provide the maximum coverage of VLANs. For example, synthetic testing module 135 may select AP 142A-1 that is on only the guest WiFi network and mapped to VLAN A; AP 142A-3 that is on only the corporate WiFi network and mapped to VLANs B, C, D, and E; and AP 142A-5 that is on both the guest WiFi network and the corporate WiFi network and mapped to VLAN A.

Alternatively, or additionally, synthetic testing module 135 may select one or more devices to perform the synthetic test based on a determined load of the devices. For example, synthetic testing module 135 may determine, based on network data 137 (e.g., client device traffic, number of client devices connected to an AP), a load of each of APs 142A of site 102A. Based on the determined load of each of APs 142A, synthetic testing module 135 may compare the load with a predefined threshold of a network load to determine the one or more APs 142A that have the least amount of load and may select from among the one or more APs 142A that have the least amount of load to perform the synthetic test.

In response to determining the network conditions (e.g., synthetic test time window and/or synthetic test scope) to perform the synthetic test, synthetic timing module 135 may then instruct the one or more selected APs to perform the synthetic test. As described above, synthetic testing module 135 may instruct the one or more selected APs to perform the synthetic test proactively (e.g., before the detection of an issue or network event). Additionally, or alternatively, synthetic testing module 135 may instruct the one or more selected APs to perform the synthetic test reactively (e.g., in response to the detection of an issue or network event) to confirm a previously detected issue. The synthetic tests may test for pre-connection and/or post-connection issues of the network.

In some examples, synthetic testing module 135 may instruct one or more network devices to perform a synthetic test independent of network conditions. For example, synthetic testing module 135 may instruct one or more network devices to perform a synthetic test based on a receipt of user input from an administrator, e.g., using admin device 111, requesting the synthetic test to be performed on-demand.

Synthetic testing module 135 may obtain data from the one or more selected APs performing the synthetic test. The data (referred to herein as "test results data") may indicate, in some examples, an issue at the network site or confirm a previously detected issue at the network site. In response to receiving the test results data, synthetic testing module 135 is further configured to perform an action, such as sending a notification to an administrator of the network site that indicates the detected issue and, in some cases, sending one or more recommended actions to prevent or remedy the issue. In some examples, synthetic test module 135 may automatically perform a corrective action (e.g., provide configuration for the AP, restart the AP, etc.) to prevent or remedy the issue.

In some examples, the network devices capable of performing synthetic tests may primarily be APs at the network site as APs have the most flexibility to mimic client devices, particularly with respect to pre-connection tasks. In other examples, switches at the network site may additionally, or alternatively, be used as network devices capable of performing synthetic tests, e.g., switches may be used to mimic the client devices in order to test a Radius server (e.g., AAA server 110). In some examples, APs and/or switches may be configured to mimic post-connection traffic types to extend synthetic testing beyond pre-connection states of client devices. Although the examples described above are described with respect to network devices running the synthetic tests, other devices may be capable of performing the synthetic tests, such as LTEs 148, servers 128, or other devices managed by NMS 130, such as NAC servers or systems, routers, gateways, etc.

The techniques of this disclosure provide one or more technical advantages and practical applications. For example, by automatically scheduling and/or orchestrating synthetic tests, the testing may be performed during periods of low or no client device usage even without actual client device usage data that is typically used to test networks at one or more of sites. Additionally, by automatically scheduling and/or orchestrating synthetic tests to be performed during periods of low or no client device usage, testing does not have to be performed during periods of high client device usage, which would cause a disruption to the network. Moreover, the techniques described in this disclosure also enable the selection of a minimal number of devices to perform the tests or devices that have limited to no load, which has a smaller impact on the network infrastructure and reduces the risk of causing significant disruptions to the network.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

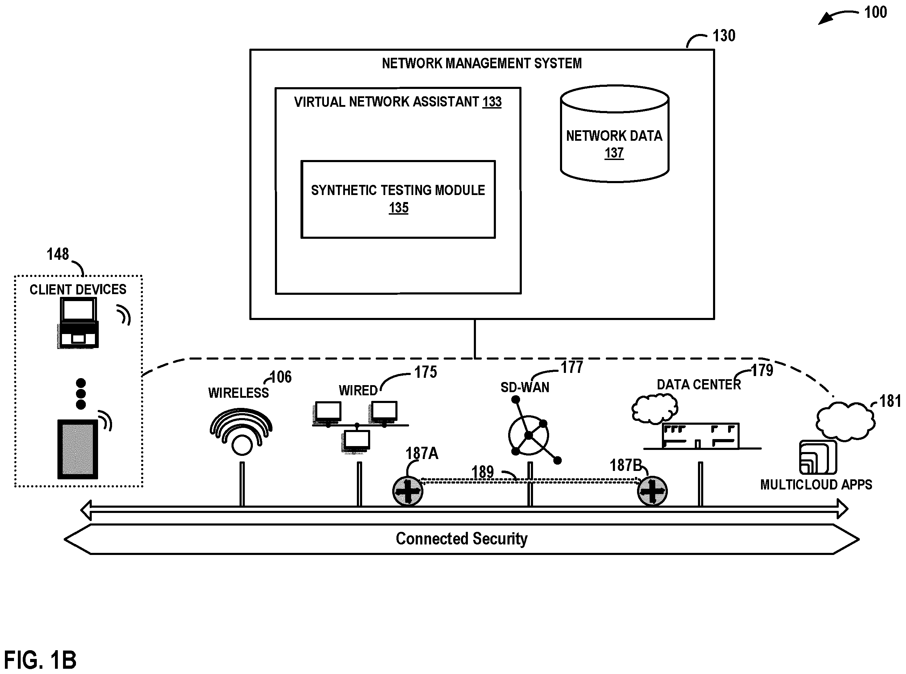

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from "client," e.g., user devices 148 connected to wireless network 106 and wired LAN 175 (far left of FIG. 1B), to "cloud," e.g., cloud-based application services 181 that may be hosted by computing resources within data centers 179 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 133 includes a natural language processing engine to provide AI-driven support and troubleshooting, anomaly detection, AI-driven location services, and AI-driven radio frequency (RF) optimization with reinforcement learning.

As illustrated in the example of FIG. 1B, AI-driven NMS 130 also provides configuration management, monitoring and automated oversight of software defined wide-area network (SD-WAN) 177, which operates as an intermediate network communicatively coupling wireless networks 106 and wired LANs 175 to data centers 179 and application services 181. In general, SD-WAN 177 provides seamless, secure, traffic-engineered connectivity between "spoke" routers 187A of wired networks 175 hosting wireless networks 106, such as branch or campus networks, to "hub" routers 187B further up the cloud stack toward cloud-based application services 181. SD-WAN 177 often operates and manages an overlay network on an underlying physical Wide-Area Network (WAN), which provides connectivity to geographically separate customer networks. In other words, SD-WAN 177 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 177 may implement a stateful, session-based routing scheme in which the routers 187A, 187B dynamically modify contents of original packet headers sourced by client devices 148 to steer traffic along selected paths, e.g., path 189, toward application services 181 without requiring use of tunnels and/or additional labels. In this way, routers 187A, 187B may be more efficient and scalable for large networks since the use of tunnel-less, session-based routing may enable routers 187A, 187B to achieve considerable network resources by obviating the need to perform encapsulation and decapsulation at tunnel endpoints. Moreover, in some examples, each router 187A, 187B may independently perform path selection and traffic engineering to control packet flows associated with each session without requiring use of a centralized SDN controller for path selection and label distribution. In some examples, routers 187A, 187B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent No. 11,075,824, entitled "IN-LINE PERFORMANCE MONITORING," and issued on July 27, 2021, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 175, and /or SD-WAN 177. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network," each of which is hereby incorporated by reference.

In accordance with the techniques described in this disclosure, NMS 130 is configured to perform automated scheduling and/or orchestration of synthetic tests for network sites, as further described in this disclosure. As described above, synthetic testing module 135 is configured to determine certain network conditions of wireless network 106, wired network 175, and/or SD-WAN 177, to perform synthetic tests. For example, synthetic testing module 135 may determine a lull period to perform one or more tests with minimal impact to the customer's network infrastructure or the network service provider's cloud infrastructure. In some examples, synthetic testing module 135 may select one or more devices to perform the test, such as one or more devices (e.g., APs 142 of FIG. 1A) associated with wireless networks 106 and/or wired LAN networks 175, routers 187 associated with SD-WAN 177, devices associated with data centers 179, or any device managed by NMS 130.

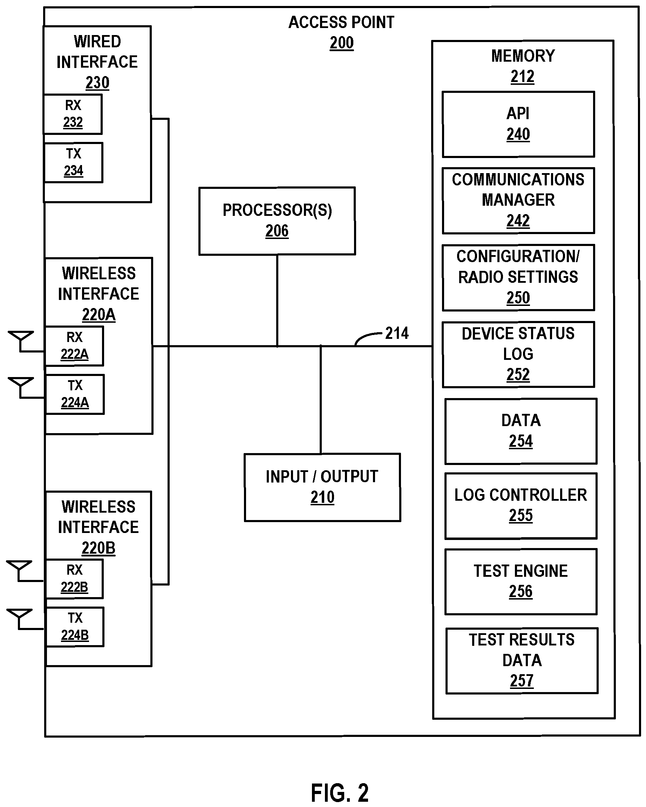

FIG. 2 is a block diagram of an example access point (AP) device 200, in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210, coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, access point 200 to a wired network device, such as one of switches 146 of FIG. 1A, within the wired network via a cable, such as an Ethernet cable.

First and second wireless interfaces 220A and 220B represent wireless network interfaces and include receivers 222A and 222B, respectively, each including a receive antenna via which access point 200 may receive wireless signals from wireless communications devices, such as UEs 148 of FIG. 1A. First and second wireless interfaces 220A and 220B further include transmitters 224A and 224B, respectively, each including transmit antennas via which access point 200 may transmit wireless signals to wireless communications devices, such as LTEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable media including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of access point 200. For example, memory 212 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210. Communications manager 242 includes program code that, when executed by processor(s) 206, allow access point 200 to communicate with LTEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may measure and report network data from status log 252 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130 may determine one or more SLE metrics based on the SLE-related data received from the APs in the wireless network and store the SLE metrics as network data 137 (FIG. 1A).

In accordance with the techniques described in this disclosure, AP device 200 includes a test engine 256 configured to perform one or more tests received from a synthetic testing module (e.g., synthetic testing module 135 of FIG. 1A). For example, AP device 200 may receive a message from synthetic testing module 135 that specifies an address of the selected AP device (e.g., MAC address) and a payload specifying test information that the selected AP device is to perform. The test information may include configuration files or commands to perform one or more synthetic tests. In response to determining that the message includes an address that specifies AP device 200, AP device 200 may extract the test information (e.g., commands) from the payload of the message and provide the test information to test engine 256. Test engine 256 may then execute the commands received from synthetic testing module 135. As one example, the message from synthetic testing module 135 may include test information for a speed test (or any other test) to be performed by AP device 200. The test information may include, for example, configuration information (e.g., commands) for AP device 200 to perform a speed test between AP device 200 and a target device, the testing protocol, the schedule in which to perform the speed test, and/or other information that may instruct AP device 200 to perform a synthetic test. In some examples, a third-party vendor may provide services for performing a speed test. In these examples, synthetic testing module 135 may send test information including vendor-specific instructions to enable AP device 200 to operate with the third-party vendor that provides the speed test service.

As part of executing the commands, test engine 256 may receive and/or generate test results. Test engine 256 may store the test results in memory 212, as test results data 257. Test engine 256 may send test results data 257 to synthetic testing module 135 for further analysis, as further described below.

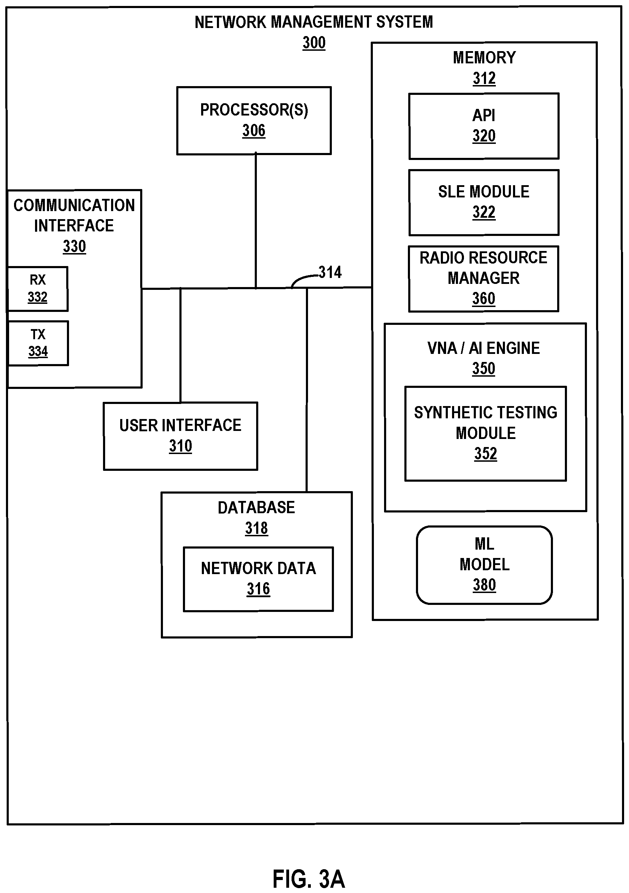

FIG. 3A is a block diagram of an example network management system (NMS) 300, in accordance with one or more techniques of the disclosure. NMS 300 may be used to implement, for example, NMS 130 in FIGS. 1A-1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146 and other network nodes within network 134, e.g., routers 187 of FIG. 1B, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable media including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, servers 110, 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not receive, collect, or otherwise have access to network data from the third-party network devices.

The data and information received by NMS 300 may include, for example, telemetry data, SLE-related data, or event data received from one or more of client device APs 148, APs 142, switches 146, or other network nodes, e.g., routers 187 of FIG. 1B, used by NMS 300 to remotely monitor the performance of wireless networks 106A-106N and application sessions from client device to cloud-based application server. NMS 300 may further transmit data via communications interface 330 to any of network devices such as client devices 148, APs 142, switches 146, other network nodes within network 134, admin device 111 to remotely manage wireless networks 106A-106N and portions of the wired network.

Memory 312 includes one or more devices configured to store programming modules and/or data associated with operation of NMS 300. For example, memory 312 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, and a radio resource management (RRM) engine 360. NMS 300 may also include any other programmed modules, software engines and/or interfaces configured for remote monitoring and management of wireless networks 106A-106N and portions of the wired network, including remote monitoring and management of any of APs 142/200, switches 146, or other network devices, e.g., routers 187 of FIG. 1B.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1 through 142A-N collect SLE-related data from UEs 148A-1through 148A-N currently connected to wireless network 106A. This data is transmitted to NMS 300, which executes by SLE module 322 to determine one or more SLE metrics for each LTE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

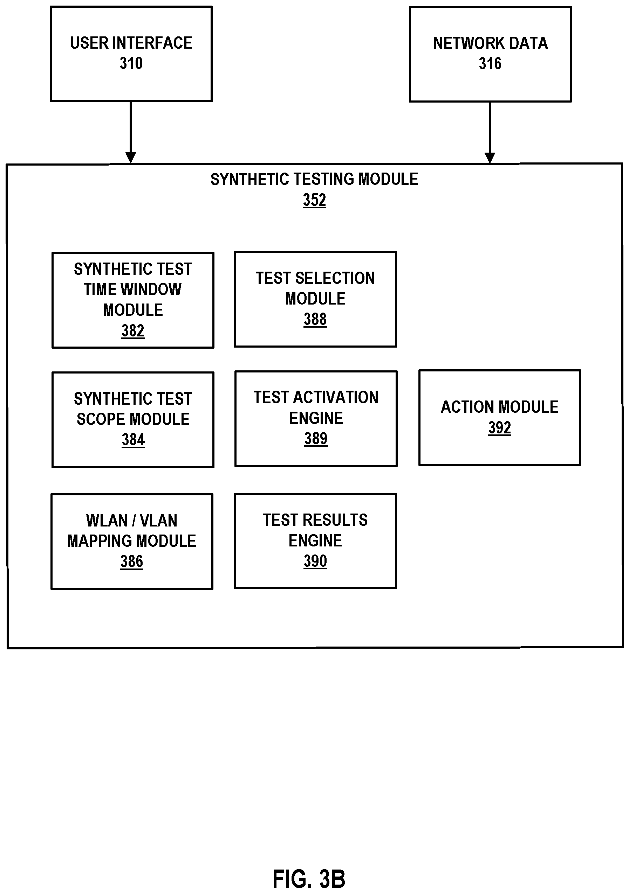

In accordance with one or more techniques of this disclosure, VNA 350 includes a synthetic testing module 352 configured to automatically schedule and/or orchestrate synthetic tests for network sites, as further described below in FIG. 3B.

In some examples, ML model 380 may comprise a supervised ML model that is trained, using training data comprising pre-collected, labeled network data received from network devices (e.g., client devices, APs, switches and/or other network nodes), to identify a synthetic test time window and/or synthetic test scope. The supervised ML model may comprise one of a logistical regression, naive Bayesian, support vector machine (SVM), or the like. In other examples, ML model 380 may comprise an unsupervised ML model. Although not shown in FIG. 3A, in some examples, database 318 may store the training data and VNA/AI engine 350 or a dedicated training module may be configured to train ML model 380 based on the training data to determine appropriate weights across the one or more features of the training data.

FIG. 3B is a block diagram illustrating an example synthetic testing module, in accordance with the techniques described in this disclosure. Synthetic testing module 352 includes one or more software modules and/or engines that, when executed by the one or more processors (e.g., processor(s) 306 of FIG. 3A), cause the processors to schedule and/or orchestrate synthetic tests for the network sites. In this example, FIG. 3B includes a synthetic test time window module 382, a synthetic test scope module 384, and a WLAN / VLAN mapping module 386.

Synthetic test time window module 382 is configured to determine a period of time at which there is minimal or no client activity (e.g., lull period). For example, synthetic test time window module 382 may obtain network data, e.g., an active client count, from each AP of a site (e.g., AP 142A of site 102A). Based on the obtained network data, synthetic test time window module 382 may, as one example, determine a lull period. For example, synthetic test time window module 382 may input the network data into a model (e.g., ML model 380 of FIG. 3A) to determine a lull period. An example input schema may be as follows:
Schema:

```
        |-- org_id: string (nullable = true)
        |-- site_id: string (nullable = true)
        |-- active_client_count: double (nullable = true)
        |-- ap_id: long (nullable = true)
        |-- time: integer (nullable = true)
```

An administrator may specify criteria for the ML model to determine the lull period. For example, the administrator may specify criteria to determine the minimum and maximum of active client count for a day (or any other predefined time period), define a range for each day (e.g., maximum and minimum), define a threshold for quiet periods within the day (e.g., d = 1% or "soft_lull" : 5% of range (set parameter for evaluation), define a lull period for each day (e.g., active client count < min + d), check a lull detection frequency (%) of times during a prior period of time (e.g., last 4-5 weeks) when the interval was "lull", calculate an average of a maximum number of active clients for each AP for all hours of the day across the period of time (e.g., several weeks), aggregate the average of a maximum number of active clients for each AP of a site for the average of maximum number of active clients for the site, run a validation to define leading seasonality for each site (e.g., daily or weekly), and/or run the model with defined seasonality.

Based on the lull period, the ML model may determine a suggested period of time at which to run one or more tests (e.g., synthetic test time window). The administrator may specify criteria for the ML model to determine the synthetic test time window. For example, the administrator may specify criteria to collect all lull period candidates with historical lull period frequency (e.g., frequency > 0.25 or above 0), specify a score for a lull period based on ranking for lull period probability and average number of clients (e.g., score = 1/(probability_rank * average_client_counts_rank), select best hour candidates with the highest scores, identify sites/days without selected best hours and set time of maintenance during the night, and identify sites/days with multiple recommended hours and selecting hours with the highest historical frequency of lull (if sites still have multiple maintenance hours, specifying the earliest one based on local hours).

The ML model outputs a prediction (e.g., forecast) of the synthetic test time window. An example output schema may be as follows:
OUTPUT SCHEMA:

```
         |-- org_id: string (nullable = true)
         |-- site_id: string (nullable = true)
         |-- day_of_week: integer (nullable = true)
         |-- day_name: string (nullable = true)
         |-- hour: integer (nullable = true)
         |-- timezone: string (nullable = true)
         |-- local_hour: integer (nullable = true)
         |-- local_day_of_week: integer (nullable = true)
         |-- local_day_name: string (nullable = true)
         |-- active_clients_mean: double (nullable = true)
         |-- lull_frequency: double (nullable = true)
         |-- active_client_max_av: double (nullable = true)
         |-- active_client_min_av: double (nullable = true)
         |-- model_time: long (nullable = true)
         |-- lull: integer (nullable = false)
         |-- window_score: double (nullable = true)
         |-- best_hour: integer (nullable = false)
```

The synthetic test time window may be determined for a given site. For example, a synthetic test time window for a particular site (e.g., 102A) may be different than a synthetic test time window for another site (e.g., 102N).

Synthetic test scope module 384 is configured to determine a test scope to run a test. For example, synthetic test scope module 384 (or another module of NMS 300) may obtain network data of network devices within the site to generate a graph representing a network topology of the site. As one example, synthetic test scope module 384 may obtain network data associated with network nodes of a site as shown below:
root

```
        |-- orgid: string (nullable = true)
        |-- source: string (nullable = true)
        |-- target: string (nullable = true)
        |-- sourcePort: string (nullable = true)
        |-- targetPort: string (nullable = true)
        |-- siteld: string (nullable = true)
        |-- sourceVersion: string (nullable = true)
        |-- sourcelp: string (nullable = true)
        |-- targetversion: string (nullable = true)
        |-- targetIp: string (nullable = true)
        |-- relType: string (nullable = true)
        |-- sourceName: string (nullable = true)
        |-- targetName: string (nullable = true)
        |-- targetvendor: string (nullable = true)
        |-- sourceVendor: string (nullable = true)
        |-- id: string (nullable = true)
        |-- from: string (nullable = true)
        |-- to: string (nullable = true)
        |-- lastSeenAt: long (nullable = true)
        |-- createdAt: long (nullable = true)
        |-- expiredAt: integer (nullable = true)
        |-- lastModifiedAt: integer (nullable = true)
```

Synthetic test scope module 384 may also obtain network data associated with edges of the network nodes of the site as shown below:
root

```
        |-- orgid: string (nullable = true)
        |-- siteld: string (nullable = true)
        |-- mac: string (nullable = true)
        |-- version: string (nullable = true)
        |-- name: string (nullable = true)
        |-- ipAddress: string (nullable = true)
        |-- deviceType: string (nullable = true)
        |-- vendor: string (nullable = true)
        |-- model: string (nullable = true)
        |-- id: string (nullable = true)
        |-- lastSeenAt: long (nullable = true)
        |-- createdAt: long (nullable = true)
        |-- expiredAt: integer (nullable = true)
        |-- lastModifiedAt: integer (nullable = true)
```

Synthetic test scope module 384 merges the above network data to determine the connections between all nodes of the site. In response to determining the connections between all nodes of the site, synthetic test scope module 384 may generate a graph of the network topology that represents the uplink connections from APs 142 to a network hub (e.g., root node) for the site. For example, the graph of the network topology may include representations of uplink connections between APs 142 and access switches, uplink connections between the access switches and core switches, and uplink connections between the core switches and a network hub.

Synthetic test scope module 384 may perform a graph traversal of the graph of the network topology to determine network paths to the root (e.g., paths from each of APs 142 to the network hub) and to determine whether there are any overlapping network paths. For example, synthetic test scope module 384 may determine, for every AP, the network nodes that are along a path to the root. Based on the determination of overlapping network paths, synthetic test scope module 384 may select one or more APs (e.g., edge node(s) of the graph) to perform the test.

The graph may additionally, or alternatively, include a graph representing the neighbor relationships between APs. For example, the graph of the neighbor relationship may represent APs that have detected a signal from one or more neighboring APs. The graph of the neighbor relationships may be generated based on RSSI values (or any other information indicative of communication relationships between the APs). Synthetic test scope module 384 may determine based on the graph of the neighbor relationships which APs are strong neighbors (e.g., higher RSSI values) and which APs are distant neighbors (e.g., lower RSSI values). The graph of neighbor relationships may include one or more groups of strong neighbors. Synthetic test scope module 384 may select one or more APs from among each of the strong neighbors groups to perform the test.

Alternatively, or additionally, synthetic test scope module 384 may select one or more devices to perform the synthetic test based on a determined load of the devices. For example, synthetic test scope module may determine, based on network data 316 (e.g., client device traffic, number of client devices connected to an AP), a load of each AP of a network site. Based on the determined load of each AP, synthetic test scope module 384 may compare the load with a predefined threshold of a network load to determine the one or more APs that have the least amount of load and may select from among the one or more APs that have the least amount of load to perform the synthetic test.

The graph may additionally, or alternatively, include a graph representing the mapping of WLANs and VLANs of a site. As one example, WLAN / VLAN mapping module 386 may obtain network data associated with APs of the site as shown below:
root

```
        |-- active_client_count: long (nullable = true)
        |-- ap_id: string (nullable = true)
        |-- config_time: long (nullable = true)
        |-- ext_ip: string (nullable = true)
        |-- firmware_version: string (nullable = true)
        |-- first_seen: long (nullable = true)
        |-- inactive_wired_vlans: array (nullable = true)
        | |-- element: long (containsNull = true)
        |-- input_cloud_partition: long (nullable = true)
        |-- ip: string (nullable = true)
        |-- model: string (nullable = true)
        |-- org_id: string (nullable = true)
        |-- radios: array (nullable = true)
        | |-- element: map (containsNull = true)
        | | |-- key: string
        | | |-- value: string (valueContainsNull = true)
        |-- service_provider_ip: string (nullable = true)
        |-- service_provider_name: string (nullable = true)
        |-- site_id: string (nullable = true)
        |-- switch_ip: string (nullable = true)
        |-- switch_mac: string (nullable = true)
        |-- switch_model: string (nullable = true)
        |-- switch_name: string (nullable = true)
        |-- switch_port_id: string (nullable = true)
        |-- switch_vendor: string (nullable = true)
        |-- switch_version: string (nullable = true)
        |-- terminator: string (nullable = true)
        |-- terminator_timestamp: long (nullable = true)
        |-- uptime: long (nullable = true)
```

WLAN / VLAN mapping module 386 may also obtain network data associated with WLAN and VLAN mapping as shown below:
root

```
        |-- site_id: string (nullable = true)
        |-- wlan_id: string (nullable = true)
        |-- vlan_ids: array (nullable = true)
        | |-- element: string (containsNull = true)
        |-- stats_agg_time: integer (nullable = true)
```

WLAN / VLAN mapping module 386 merges the above network data to determine the VLANs for every AP of the site. In response to determining the VLANs for every AP of the site, synthetic test scope module 384 may select the AP that provides maximum coverage of WALN and VLAN combination.

In some examples, synthetic test scope module 384 may select one or more APs to perform a test based on an aggregated graph representing the network topology, the neighbor relationships, and the mapping of WLANs and VLANs of a site. In this example, synthetic test scope module 384 may select one or more APs from among APs of overlapping network paths, from among APs of one or more groups of strong neighbors, and are APs that provide the fewest number of AP and VLAN combinations that provide the maximum coverage of VLANs. To select the one or more APs to perform the test, synthetic test scope module 384 may perform the following steps: (1) Generate a graph of connected devices and APs; (2) determine, for every AP, the nodes that are along the path to the root (top device in the site); (3) store, for every AP, a set of all devices in the site (denoted as D_{Ai}) and a set of all VLANs of the site (denoted as V_{Ai}); (4) compute the union of all D_{Ai} and V_{Ai} (e.g., Full Set, F = D_{Ai} + V_{Ai}); (5) initialize an empty set as the set of devices and VLAN covered (denoted as C); (6) determine the AP with the maximum elements with D_{Ai} + V_{Ai} - C (set of all nodes and VLANs which are not covered by any APs), subject to conditions, such as the maximum overlap between VLANs <= VLAN_limit (e.g., 10). VLAN_limit is the maximum number of VLANs to test on one AP; (7) store the selected AP and add the devices in its path and VLANs to C; (8) repeat steps 6 and 7 until C = F; and (9) output a list of selected APs to perform the test.

An example output of the list of selected APs is shown below:
root

```
        |-- org_id: string (nullable = true)
        |-- site_id: string (nullable = true)
        |-- ap_mac: string (nullable = true)
        |-- vlan_ids: string (nullable = true)
```

In some examples, the VLAN is redistributed equally among the APs selected for the site to ensure equal distribution of tests on APs.

Synthetic testing module 352 may include a test selection module 388 configured to select one or more tests to be performed. In some examples, test selection module 388 may select one or more tests to detect pre-connection (e.g., tests to detect end-to-end connectivity, etc.) and/or post-connection issues (e.g., tests to determine if the network devices are operating as intended, etc.).

In some examples, synthetic testing module 352 may include a test activation module 389 configured to determine, based on network data 316 (such as network events) whether to invoke a synthetic test either proactively or reactively. For example, test activation module 389 may determine, based on network data 316, whether to perform a synthetic test irrespective of whether there is a previously detected issue or network event. In some examples, test activation module 389 may determine, based on network data 316, whether to perform a synthetic test in response to the detection of a previous issue or network event to confirm the previously detected issue or network event (e.g., if data indicative of DHCP connection issue, select a DHCP test to confirm DHCP connection issue).

In some examples, synthetic testing module 352 may receive user input via user interface 310 to request for a synthetic test to be performed on-demand. In response, test activation module 389 may configure synthetic testing module 352 to perform a synthetic test on-demand.

In some examples, test activation module 389 may provide scheduling of tests to avoid multiple tests from being performed concurrently, which may add overhead to the network. For example, test activation module 389 may determine, based on the request to initiate an on-demand synthetic test, whether the performance of the on-demand synthetic test overlaps with other scheduled tests that are already being performed or scheduled to be performed within a test duration of the on-demand synthetic test. Based on a determination that the performance of the requested on-demand synthetic test overlaps with another test that is already being performed or is scheduled to be performed within the test duration of the on-demand synthetic test, test activation module 389 may prevent or reschedule the on-demand synthetic test or the other tests, respectively, or provide a notification that the test durations overlap to the user to delay or reschedule the on-demand synthetic test or the other tests, respectively.

Synthetic testing module 352 may include a test results engine 390 configured to obtain network data received from the network device that performed the synthetic test (referred to herein as "test results data"). In response to obtaining the test results data, test results engine 390 may identify one or more issues based on the test results data. In some examples, test results engine 390 may send the test results data to the SLE module 322 to analyze the test results data and to determine one or more SLE metrics based on the test results data.

Synthetic testing module 352 may also include an action module 392 that may perform an action in response to the identification of one or more issues determined from the test results data. For example, action module 392 may generate and send a notification to an administrator of the network site to indicate the detected issue, such as generating a user interface element representing the detected issue for display on a display device. In some examples, action module 392 may automatically correct the detected issue (e.g., if DHCP connection issue, configure AP to reestablish DHCP connection).

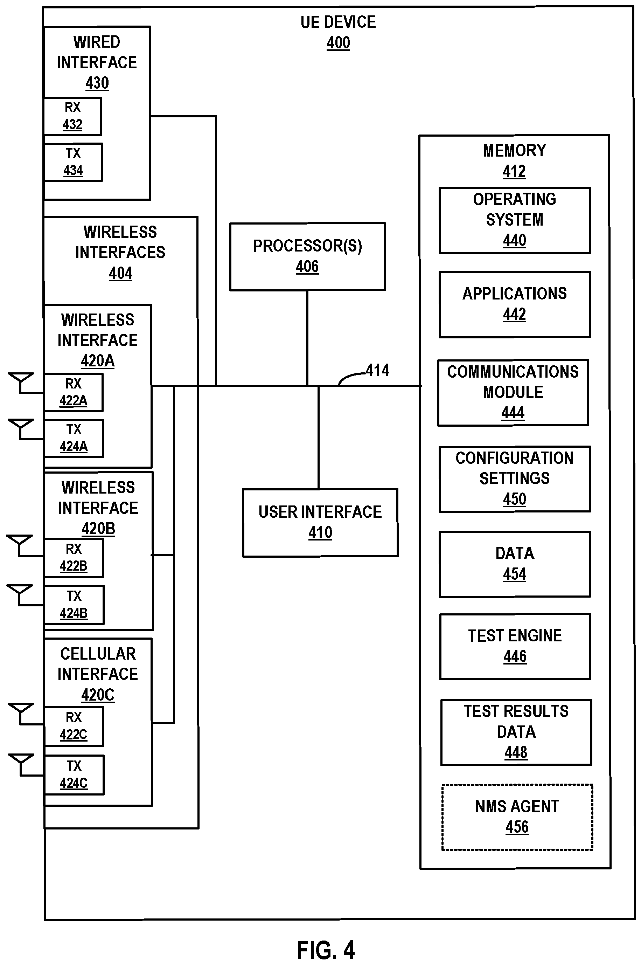

FIG. 4 shows an example user equipment (UE) device 400, in accordance with one or more techniques of this disclosure. Example LTE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. In some examples, LTE 400 may also include a wired client-side device, e.g., an IoT device such as a printer, a security sensor or device, an environmental sensor, or any other device connected to the wired network and configured to communicate over one or more wireless networks.

LTE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE 400 to a wired network device, such as one of switches 146 of FIG. 1A, within the wired network via a cable, such as one of Ethernet cables 144 of FIG. 1A.

First, second and third wireless interfaces 420A, 420B, and 420C include receivers 422A, 422B, and 422C, respectively, each including a receive antenna via which UE 400 may receive wireless signals from wireless communications devices, such as APs 142 of FIG. 1A, AP 200 of FIG. 2, other LTEs 148, or other devices configured for wireless communication. First, second, and third wireless interfaces 420A, 420B, and 420C further include transmitters 424A, 424B, and 424C, respectively, each including transmit antennas via which UE 400 may transmit wireless signals to wireless communications devices, such as APs 142 of FIG. 1A, AP 200 of FIG. 2, other UEs 148 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which LTE device 400 may connect to a cellular network.

Processor(s) 406 execute software instructions, such as those used to define a software or computer program, stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Communications module 444 includes program code that, when executed by processor(s) 406, enables LTE 400 to communicate using any of wired interface(s) 430, wireless interfaces 420A-420B and/or cellular interface 450C. Configuration settings 450 include any device settings for LTE 400 settings for each of wireless interface(s) 420A-420B and/or cellular interface 420C.

Data storage 454 may include, for example, a status/error log including a list of events specific to UE 400. The events may include a log of both normal events and error events according to a logging level based on instructions from NMS 130. Data storage 454 may store any data used and/or generated by UE 400, such as data used to calculate one or more SLE metrics or identify relevant behavior data, that is collected by UE 400 and either transmitted directly to NMS 130 or transmitted to any of APs 142 in a wireless network 106 for further transmission to NMS 130.

As described herein, UE 400 may measure and report network data from data storage 454 to NMS 130. The network data may comprise event data, telemetry data, and/or other SLE-related data. The network data may include various parameters indicative of the performance and/or status of the wireless network. NMS 130 may determine one or more SLE metrics and store the SLE metrics as network data 137 (FIG. 1A) based on the SLE-related data received from the LTEs or client devices in the wireless network.

Optionally, UE device 400 may include an NMS agent 456. NMS agent 456 is a software agent of NMS 130 that is installed on UE 400. In some examples, NMS agent 456 can be implemented as a software application running on LTE 400. NMS agent 456 collects information including detailed client-device properties from LTE 400, including insight into LTE 400 roaming behaviors. The information provides insight into client roaming algorithms, because roaming is a client device decision. In some examples, NMS agent 456 may display the client-device properties on LTE 400. NMS agent 456 sends the client device properties to NMS 130, via an AP device to which LTE 400 is connected. NMS agent 456 can be integrated into a custom application or as part of location application. NMS agent 456 may be configured to recognize device connection types (e.g., cellular or Wi-Fi), along with the corresponding signal strength. For example, NMS agent 456 recognizes access point connections and their corresponding signal strengths. NMS agent 456 can store information specifying the APs recognized by UE 400 as well as their corresponding signal strengths. NMS agent 456 or other element of LTE 400 also collects information about which APs the UE 400 connected with, which also indicates which APs the UE 400 did not connect with. NMS agent 456 of LTE 400 sends this information to NMS 130 via its connected AP. In this manner, UE 400 sends information about not only the AP that UE 400 connected with, but also information about other APs that UE 400 recognized and did not connect with, and their signal strengths. The AP in turn forwards this information to the NMS, including the information about other APs the UE 400 recognized besides itself. This additional level of granularity enables NMS 130, and ultimately network administrators, to better determine the Wi-Fi experience directly from the client device's perspective.

In some examples, NMS agent 456 further enriches the client device data leveraged in service levels. For example, NMS agent 456 may go beyond basic fingerprinting to provide supplemental details into properties such as device type, manufacturer, and different versions of operating systems. In the detailed client properties, the NMS 130 can display the Radio Hardware and Firmware information of UE 400 received from NMS client agent 456. The more details the NMS agent 456 can draw out, the better the VNA/AI engine gets at advanced device classification. The VNA/AI engine of the NMS 130 continually learns and becomes more accurate in its ability to distinguish between device-specific issues or broad device issues, such as specifically identifying that a particular OS version is affecting certain clients.

In some examples, NMS agent 456 may cause user interface 410 to display a prompt that prompts an end user of LTE 400 to enable location permissions before NMS agent 456 is able to report the device's location, client information, and network connection data to the NMS. NMS agent 456 will then start reporting connection data to the NMS along with location data. In this manner, the end user of the client device can control whether the NMS agent 456 is enabled to report client device information to the NMS.

In accordance with the techniques described in this disclosure, UE device 400 includes a test engine 446 configured to perform one or more tests received from a synthetic testing module (e.g., synthetic testing module 135 of FIG. 1). For example, UE device 400 may receive a message from synthetic testing module 135 that specifies an address of the selected UE device (e.g., MAC address) and a payload specifying test information that the selected LTE device is to perform. In response to determining that the message includes an address that specifies UE device 400, LTE device 400 may extract the test information (e.g., commands) from the payload of the message and provide the test information to test engine 446. Test engine 446 may then execute the commands received from synthetic testing module 135.

As part of executing the commands, test engine 446 may receive and/or generate test results. Test engine 446 may store the test results in memory 412, as test results data 448. Test engine 446 may send test results data 448 to synthetic testing module 135 for further analysis, as further described below.

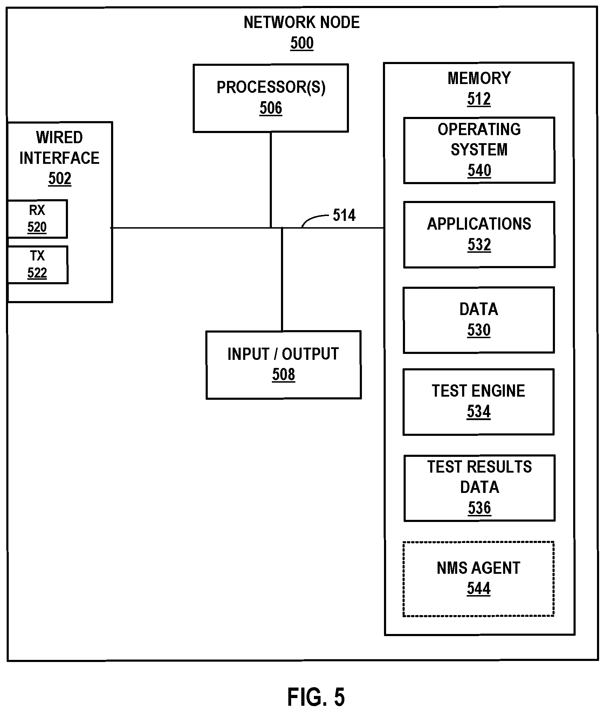

FIG. 5 is a block diagram illustrating an example network node 500, in accordance with one or more techniques of this disclosure. In one or more examples, the network node 500 implements a device or a server attached to the network 134 of FIG. 1A, e.g., switches 146, AAA server 110 or other NAC servers or systems, DHCP server 116, DNS server 122, web servers 128, etc., or another network device supporting one or more of wireless network 106, wired LAN 175, or SD-WAN 177, or data center 179 of FIG. 1B, e.g., routers 187.

In this example, network node 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples the network node 500 to a network, such as an enterprise network. Though only one interface is shown by way of example, network nodes may, and usually do, have multiple communication interfaces and/or multiple communication interface ports. Wired interface 502 includes a receiver 520 and a transmitter 522.

Memory 512 stores executable software applications 532, operating system 540 and data/information 530. Data 530 may include a system log and/or an error log that stores event data, including behavior data, for network node 500. In examples where network node 500 comprises a "third-party" network device, the same entity does not own or have access to both the APs or wired client-side devices and network node 500. As such, in the example where network node 500 is a third-party network device, NMS 130 does not receive, collect, or otherwise have access to the network data from network node 500.

In examples where network node 500 comprises a server, network node 500 may receive data and information, e.g., including operation related information, e.g., registration request, AAA services, DHCP requests, Simple Notification Service (SNS) look-ups, and Web page requests via receiver 520, and send data and information, e.g., including configuration information, authentication information, web page data, etc. via transmitter 522.

In examples where network node 500 comprises a wired network device, network node 500 may be connected via wired interface 502 to one or more APs or other wired client-side devices, e.g., IoT devices. For example, network node 500 may include multiple wired interfaces 502 and/or wired interface 502 may include multiple physical ports to connect to multiple APs or the other wired-client-side devices within a site via respective Ethernet cables. In some examples, each of the APs or other wired client-side devices connected to network node 500 may access the wired network via wired interface 502 of network node 500. In some examples, one or more of the APs or other wired client-side devices connected to network node 500 may each draw power from network node 500 via the respective Ethernet cable and a Power over Ethernet (PoE) port of wired interface 502.

In examples where network node 500 comprises a session-based router that employs a stateful, session-based routing scheme, network node 500 may be configured to independently perform path selection and traffic engineering. The use of session-based routing may enable network node 500 to eschew the use of a centralized controller, such as an SDN controller, to perform path selection and traffic engineering, and eschew the use of tunnels. In some examples, network node 500 may implement session-based routing as Secure Vector Routing (SVR), provided by Juniper Networks, Inc. In the case where network node 500 comprises a session-based router operating as a network gateway for a site of an enterprise network (e.g., router 187A of FIG. 1B), network node 500 may establish multiple peer paths (e.g., logical path 189 of FIG. 1B) over an underlying physical WAN (e.g., SD-WAN 177 of FIG. 1B) with one or more other session-based routers operating as network gateways for other sites of the enterprise network (e.g., router 187B of FIG. 1B). Network node 500, operating as a session-based router, may collect data at a peer path level, and report the peer path data to NMS 130.

In examples where network node 500 comprises a packet-based router, network node 500 may employ a packet- or flow-based routing scheme to forward packets according to defined network paths, e.g., established by a centralized controller that performs path selection and traffic engineering. In the case where network node 500 comprises a packet-based router operating as a network gateway for a site of an enterprise network (e.g., router 187A of FIG. 1B), network node 500 may establish multiple tunnels (e.g., logical path 189 of FIG. 1B) over an underlying physical WAN (e.g., SD-WAN 177 of FIG. 1B) with one or more other packet-based routers operating as network gateways for other sites of the enterprise network (e.g., router 187B of FIG. 1B). Network node 500, operating as a packet-based router, may collect data at a tunnel level, and the tunnel data may be retrieved by NMS 130 via an API or an open configuration protocol or the tunnel data may be reported to NMS 130 by NMS agent 544 or other module running on network node 500.

The data collected and reported by network node 500 may include periodically-reported data and event-driven data. Network node 500 is configured to collect logical path statistics via bidirectional forwarding detection (BFD) probing and data extracted from messages and/or counters at the logical path (e.g., peer path or tunnel) level. In some examples, network node 500 is configured to collect statistics and/or sample other data according to a first periodic interval, e.g., every 3 seconds, every 5 seconds, etc. Network node 500 may store the collected and sampled data as path data, e.g., in a buffer.

In some examples, network node 500 optionally includes an NMS agent 544. NMS agent 544 may periodically create a package of the statistical data according to a second periodic interval, e.g., every 3 minutes. The collected and sampled data periodically-reported in the package of statistical data may be referred to herein as "oc-stats." In some examples, the package of statistical data may also include details about clients connected to network node 500 and the associated client sessions. NMS agent 544 may then report the package of statistical data to NMS 130 in the cloud. In other examples, NMS 130 may request, retrieve, or otherwise receive the package of statistical data from network node 500 via an API, an open configuration protocol, or another of communication protocols. The package of statistical data created by NMS agent 544 or another module of network node 500 may include a header identifying network node 500 and the statistics and data samples for each of the logical paths from network node 500. In still other examples, NMS agent 544 reports event data to NMS 130 in the cloud in response to the occurrence of certain events at network node 500 as the events happen. The event-driven data may be referred to herein as "oc-events."

In accordance with the techniques described in this disclosure, network node 500 includes a test engine 534 configured to perform one or more tests received from a synthetic testing module (e.g., synthetic testing module 135 of FIG. 1A). For example, network node 500 may receive a message from synthetic testing module 135 that specifies an address of the selected network node (e.g., MAC address) and a payload specifying test information that the selected network node is to perform. In response to determining that the message includes an address that specifies network node 500, network node 500 may extract the test information (e.g., commands) from the payload of the message and provide the test information to test engine 534. Test engine 534 may then execute the commands received from synthetic testing module 135.

As part of executing the commands, test engine 534 may receive and/or generate test results. Test engine 534 may store the test results in memory 512, as test results data 536. Test engine 534 may send test results data 536 to synthetic testing module 135 for further analysis, as further described below.

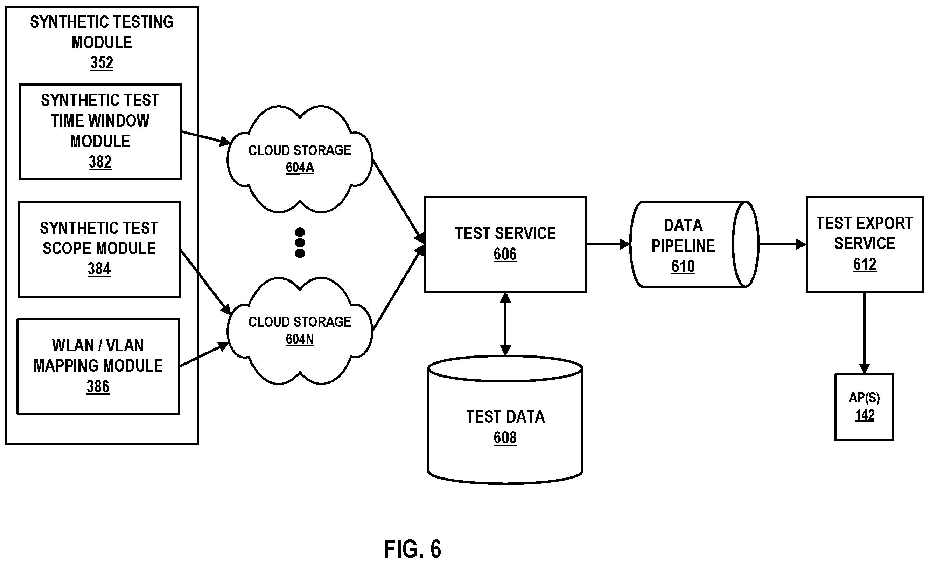

FIG. 6 illustrates an example orchestration of a synthetic test, in accordance with one or more techniques of this disclosure. Synthetic testing module 352 of NMS 300 of FIG. 3A may perform the orchestration of the synthetic test described in FIG. 6.

In this example, synthetic test time window module 382, synthetic test scope module 384, and WLAN / VLAN mapping module 386 of synthetic testing module 352 may be executed on an analytics engine (e.g., Apache Spark). The data output by the modules of synthetic testing module 352 may be stored in cloud storage 604A-604N (collectively, "cloud storage 604"). For example, the synthetic test time window determined by the synthetic test time window module 382 may be stored in cloud storage 604. Similarly, the synthetic test scope determined by the synthetic test scope module 384 may be stored in cloud storage 604. Likewise, the WLAN / VLAN mapping provided by WLAN / VLAN mapping module 386 may be stored in cloud storage 604. A test service 606 (e.g., Kafka minion) may push a particular test stored in a data store (e.g., test data 606) based on the synthetic test time window and/or synthetic test scope into a data pipeline 610 (e.g., Kafka data pipeline) to stream the test data 606 to a test export service 612 (e.g., a cloud service represented by a node within a Kafka topology graph), which in turn may push commands to a particular device, such as one or more APs 142 in this example. Although FIG. 6 is illustrated with an example of pushing commands to one or more APs 142, synthetic testing module 352 may push commands to other devices to perform the particular test, such as a client device, a network device, and/or a server, to cause the particular device to perform the particular test. In this example, test export service 612 may generate a message including an address (e.g., MAC address) of one or more APs 142 and a payload including a command specifying the particular test to be performed by the one or more APs 142. Test export service 612 then sends the message including the command specifying the particular test to the one or more APs 142.

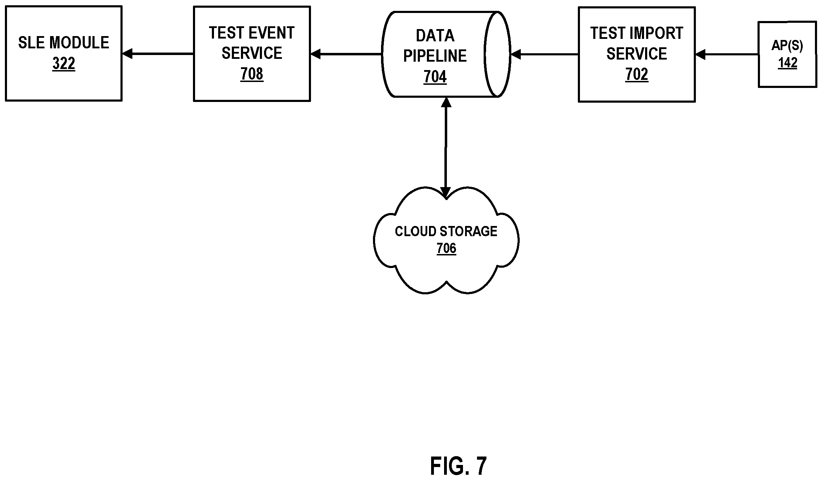

FIG. 7 illustrates an example of obtaining test result data from a particular network device that performed the synthetic test, in accordance with one or more techniques of this disclosure.

In this example, one or more APs 142 perform a particular test and send the data ("test results data") resulting from the performance of the particular test. For example, a test import service 702 may obtain the test results data and push the test results data into a data pipeline 704 (e.g., Kafka data pipeline), which in turn stores the test results data in cloud storage 706, and sends the data to a test event service 708 (e.g., executed by action module 392 of FIG. 3B) that may identify one or more issues based on the test results data and/or send the test results data to the SLE module 322 to analyze the test results data and to determine one or more SLE metrics based on the test results data.

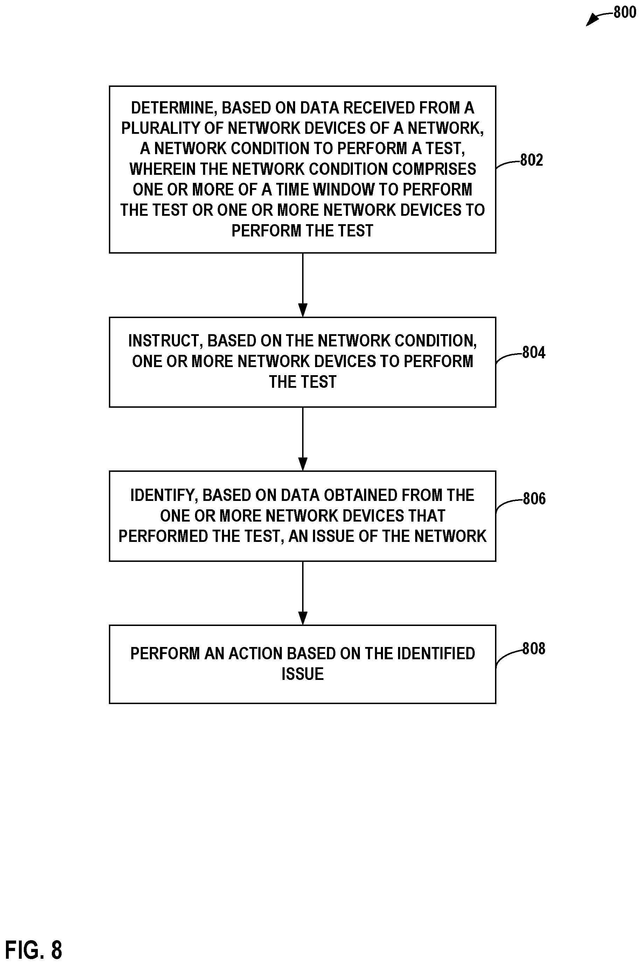

FIG. 8 is a flow chart illustrating an example operation of automatically scheduling and/or orchestrating synthetic tests for network sites based on certain network conditions, in accordance with one or more techniques of this disclosure. FIG. 8 is described with respect to NMS 130 of FIGS. 1A and 1B, and synthetic testing module 352 of NMS 300 of FIGS. 3A and 3B.

NMS 300 determines, based on network data received from a plurality of network devices of a network, a network condition to perform a test (802). For example, synthetic testing module 352 of NMS 300 may obtain, from APs 142, network data indicative of client activity over a period of time. The network data may include, for example, the number of LTEs 148 actively connected to APs 142 at site 102 and/or usage data of LTEs 148 (e.g., amount of data traffic sent or received) over a period of time. Synthetic testing module 352 may determine, based on the network data, a period of time at which there is low client activity or no client activity (e.g., "lull period"). Based on the lull period, synthetic test time window module 382 of synthetic testing module 352 may determine a suggested period of time at which to run one or more tests (e.g., "synthetic test time window"). Additionally, synthetic test scope module 384 of synthetic testing module 352 may select one or more devices (e.g., APs 142 or switches 146) to perform the test. For example, synthetic test scope module 384 may identify, for example, a minimal number of network devices to run a particular test to minimize the impact to the customer's network infrastructure or the network service provider's cloud infrastructure (e.g., "synthetic test scope"). To select one or more particular network devices to run the particular test, synthetic test scope module 384 may determine the synthetic test scope based on the network topology, neighboring relationships between APs, and/or WLAN and VLAN mapping of a wireless network. Synthetic test scope module 384 may generate a graph representing one or more of the network topology, neighboring relationships between APs, and/or WLAN and VLAN mapping of a wireless network, and select one or more APs to perform the test based on the graph.

Alternatively, or additionally, synthetic test scope module 384 may select one or more devices to perform the synthetic test based on a determined load of the devices. For example, synthetic test scope module 384 may determine, based on network data (e.g., client device traffic, number of client devices connected to an AP), a load of each of APs 142A of site 102A. Based on the determined load of each of APs 142A, synthetic test scope module 384 may compare the load with a predefined threshold of a network load to determine the one or more APs 142A that have the least amount of load and may select from among the one or more APs 142A that have the least amount of load to perform the synthetic test.

NMS 300 instructs the one or more network devices to perform the test based on the network condition (804). For example, synthetic testing module 352 of NMS 300 may invoke one or more services (e.g., test service 606 and test exporter service 612) to select a particular test and to send a message including a command to the one or more network devices to perform the particular test. Synthetic testing module 352 may instruct the one or more network devices to perform the test proactively (e.g., before the detection of an issue or network event) and/or reactively (e.g., in response to the detection of an issue or network event) to confirm a previously detected issue. The synthetic tests may test for pre-connection and/or post-connection issues of the network.

NMS 300 identifies, based on data obtained from the one or more network devices that performed the test, an issue of the network (806), and based on the identified issue, NMS 300 performs an action (808). For example, synthetic testing module 352 of NMS 300 identifies an issue at the network site based on test results data obtained from the one or more network devices that performed the test and performs an action, such as sending a notification to an administrator of the network site that indicates the detected issue, sending one or more suggested actions to remedy or prevent the issue, and/or automatically performing a corrective action (e.g., provide configuration for the AP) to remedy or prevent the issue.

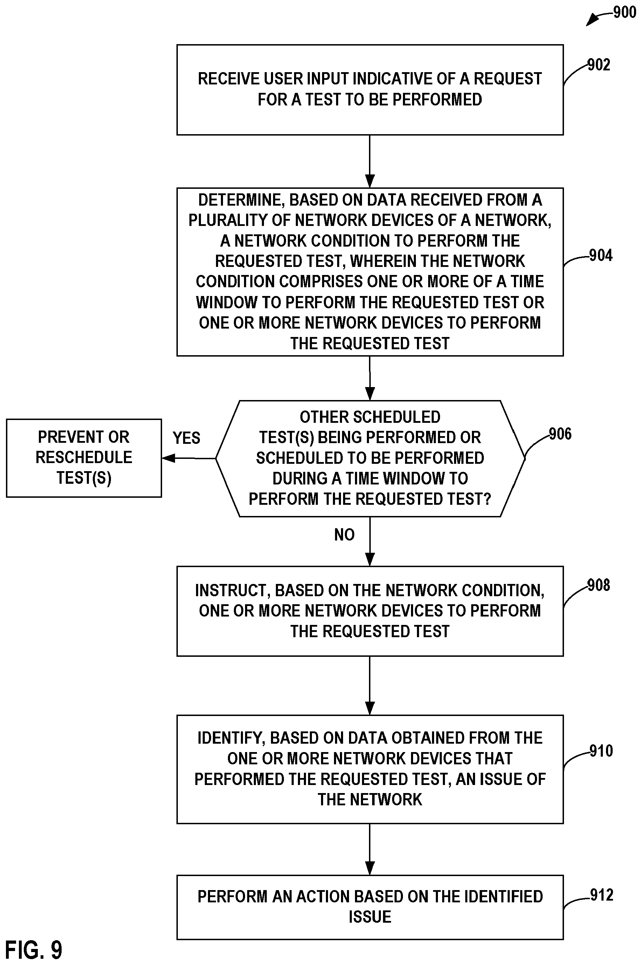

FIG. 9 is a flow chart illustrating an example operation to provide scheduling of tests to avoid multiple tests from being performed concurrently, in accordance with one or more techniques of this disclosure. FIG. 9 is described with respect to NMS 130 of FIGS. 1A and 1B, and synthetic testing module 352 of NMS 300 of FIGS. 3A and 3B configured to run synthetic tests on-demand (e.g., independent of network conditions). The operation illustrated in FIG. 9 is described with respect to a request for an on-demand test, but may apply to other types of tests, such as reactive and/or proactive tests initiated by NMS 300.

NMS 300 may receive a user input from an administrator (e.g., using admin device 111 and/or user interface 310 of NMS 300) that is indicative of a request for a test to be performed (e.g., an on-demand test) (902). In response, NMS 300 may determine, based on network data received from a plurality of network devices, a network condition to perform the requested test (904), such as a time window to perform the test or one or more network devices to perform the test. For example, synthetic testing module 352 of NMS 300 may determine, based on the network data, a lull period. Based on the lull period, synthetic test time window module 382 of synthetic testing module 352 may determine a synthetic test time window at which to run one or more tests. Additionally, synthetic test scope module 384 of synthetic testing module 352 may select one or more devices (e.g., APs 142 or switches 146) to perform the test. For example, synthetic test scope module 384 may identify, for example, a synthetic test scope (e.g., a minimal number of network devices to run a particular test to minimize the impact to the customer's network infrastructure or the network service provider's cloud infrastructure) based on the network topology, neighboring relationships between APs, and/or WLAN and VLAN mapping of a wireless network. Synthetic test scope module 384 may generate a graph representing one or more of the network topology, neighboring relationships between APs, and/or WLAN and VLAN mapping of a wireless network, and select one or more APs to perform the test based on the graph.

In some examples, NMS 300 may determine whether to perform the requested test based on whether other scheduled tests are already being performed or scheduled to be performed during a time window to perform the requested test (906). For example, synthetic test module 352 of NMS 300 may determine that performance of the requested test may overlap with another test that is already being performed or is scheduled to be performed within the time window to perform the requested test. Based on determining that performance of the requested test overlaps with another test that is already being performed or is scheduled to be performed within the time window to perform the requested test ("YES" of step 906), synthetic test module 352 may prevent or reschedule the requested test or the other tests, or provide a notification that the time window to perform the tests overlap to the user to delay or reschedule the requested test or the other tests.

In response to determining that performance of the requested test does not overlap with another test that is already being performed or is scheduled to be performed within the time window to perform the requested test ("NO" of step 906), NMS 300 instructs the one or more network devices to perform the requested test based on the network condition (908). For example, synthetic testing module 352 of NMS 300 may invoke one or more services (e.g., test service 606 and test exporter service 612) to select the requested test and to send a message including a command to the one or more network devices to perform the requested test.

NMS 300 identifies, based on data obtained from the one or more network devices that performed the requested test, an issue of the network (910), and based on the identified issue, NMS 300 performs an action (912). For example, synthetic testing module 352 of NMS 300 identifies an issue at the network site based on test results data obtained from the one or more network devices that performed the test and performs an action, such as sending a notification to an administrator of the network site that indicates the detected issue, sending one or more suggested actions to remedy or prevent the issue, and/or automatically performing a corrective action (e.g., provide configuration for the AP) to remedy or prevent the issue.

Therefore, from one perspective, there have been described techniques for performing automated scheduling and/or orchestration of synthetic tests for network sites. For example, a network management system comprises a memory and one or more processors in communication with the memory and configured to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.

Further examples are set out in the following numbered clauses.
Clause 1. A network management system comprising: a memory; and one or more processors in communication with the memory and configured to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.
Clause 2. The network management system of clause 1, wherein to determine the time window to perform the test, the one or more processors are configured to determine, based the data indicative of client activity associated with each of the plurality of network devices over a period of time, a lull period indicative of low client activity or no client activity to perform the test; and wherein to instruct the one or more network devices to perform the test, the one more processors are configured to instruct the one or more network devices to perform the test during the lull period.
Clause 3. The network management system of clause 2, wherein to determine the lull period, the one or more processors are configured to determine an average number of client devices actively connected to each of the plurality of network devices over the period of time.
Clause 4. The network management system of clause 2 or 3, wherein to determine the lull period, the one or more processors are configured to: determine a plurality of periods of time at which there is low client activity or no client activity; generate a score for each of the plurality of periods of time at which there is low client activity or no client activity; and select the lull period based on the score for each of the plurality of periods of time at which there is low client activity or no client activity.
Clause 5. The network management system of any of clauses 1-4, wherein to determine the one or more network devices of the plurality of network devices to perform the test, the one or more processors are configured to determine an impact to the network when the one or more network devices perform the test, and wherein to instruct the one or more network devices to perform the test, the one more processors are configured to instruct the one or more network devices to perform the test based on the determined impact to the network when the one or more network devices perform the test.
Clause 6. The network management system of clause 5, wherein to determine the impact to the network when the one or more network devices perform the test, the one or more processors are configured to: generate a graph of a plurality of network devices; and select the one or more network devices to perform the test from the graph of the plurality of network devices.
Clause 7. The network management system of clause 6, wherein the graph of the plurality of network devices comprises a graph representing one or more of: a network topology of the network, neighbor relationships of the plurality of network devices, or a mapping of wireless local area networks (WLANs) to virtual local area networks (VLAN) of the network.
Clause 8. The network management system of clause 6 or 7, wherein to select the one or more network devices to perform the test from the graph of the plurality of network devices, the one or more processors are configured to: select a node from the graph of the plurality of network devices that represents one or more of: a network device of a group of network devices of overlapping paths in the network, a network device of a group of network devices having a strong neighbor relationship, or a device that provides maximum coverage of a wireless local area network and virtual local area network combination.
Clause 9. The network management system of any of clauses 1-8, wherein the one or more processors are further configured to: confirm a previously detected issue of the network with the identified issue of the network.
Clause 10. The network management system of any of clauses 1-9, wherein to perform the action based on the identified issue, the one or more processors are configured to perform one or more of: send a notification to an administrator of the network indicating the issue, send one or more recommended actions to remedy or prevent the issue, or automatically perform a corrective action to remedy or prevent the issue.
Clause 11. The network management system of any of clauses 1-10, wherein the test comprises a speed test, and wherein to instruct, based on the network condition, the one or more network devices to perform the test, the one or more processors are configured to send a message to the one or more network devices to perform the speed test, wherein the message comprises one or more of configuration information for the one or more network devices to perform the speed test, a schedule to perform the speed test, or vendor-specific information for the one or more network devices to operate with a vendor that provides the speed test.
Clause 12. A method comprising: determining, by a network management system (NMS), a network condition to perform a test based on data received from a plurality of network devices, wherein the network condition comprises one or more of a time window to perform the test or one or more network devices of the plurality of network devices to perform the test; instructing, by the NMS and based on the network condition, the one or more network devices to perform the test; identifying, by the NMS and based on data obtained from the one or more network devices that performed the test, an issue of the network; and performing, by the NMS, an action based on the identified issue.
Clause 13. The method of clause 12, wherein determining the period of time to perform the test comprises determining, based on the data indicative of client activity associated with each of the plurality of network devices over a period of time, a lull period indicative of low client activity or no client activity to perform the test; and wherein instructing the one or more network devices to perform the test comprises instructing the one or more network device to perform the test during the lull period.
Clause 14. The method of clause 13, wherein determining the lull period comprises determining an average number of client devices actively connected to each of the plurality of network devices over the period of time.
Clause 15. The method of clause 13 or 14, wherein determining the lull period comprises: determining a plurality of periods of time at which there is low client activity or no client activity; generating a score for each of the plurality of periods of time at which there is low client activity or no client activity; and selecting the lull period based on the score for each of the plurality of periods of time at which there is low client activity or no client activity.
Clause 16. The method of any of clauses 12-15, wherein determining the one or more network devices of the plurality of network devices to perform the test comprises determining an impact to the network when the one or more network devices perform the test; and wherein instructing the one or more network devices to perform the test comprises instructing the one or more network devices to perform the test based on the determined impact to the network when the one or more network devices perform the test.
Clause 17. The method of clause 16, wherein determining the impact to the network when the one or more network devices perform the test comprises: generating a graph of the plurality of network devices; and selecting the one or more network device to perform the test from the graph of the plurality of network devices.
Clause 18. The method of clause 17, wherein the graph of the plurality of network devices comprises a graph representing one or more of: a network topology of the network, neighbor relationships of the plurality of network devices, or a mapping of wireless local area networks (WLANs) to virtual local area networks (VLAN) of the network.
Clause 19. The method of clause 17 or 18, wherein selecting the one or more network device to perform the test from the graph of the plurality of network devices comprises: selecting a node from the graph of the plurality of network devices that represents one or more of: a network device of a group of network devices of overlapping paths in the network, a network device of a group of network devices having a strong neighbor relationship, or a device that provides maximum coverage of a wireless local area network and virtual local area network combination.
Clause 20. Computer-readable storage comprising instructions that, when executed, cause one or more processors to: determine, based on data received from a plurality of network devices of a network, a network condition to perform a test, wherein the network condition comprises one or more of a time window to perform the test or one or more network devices of the plurality of network devices to perform the test; instruct, based on the network condition, the one or more network devices to perform the test; identify, based on data obtained from the one or more network devices that performed the test, an issue of the network; and perform an action based on the identified issue.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable medium comprising instructions that, when executed, cause a processor to perform one or more of the methods described above. For example, the computer-readable medium may comprise (e.g. store and/or convey) such instructions for execution by a processor.

A computer-readable medium may form part of a computer program product, which may include packaging materials. A computer-readable medium may comprise a computer data storage medium and/or a computer data transmission medium.

A computer data storage medium may be provided by way of random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. In some examples, such a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer data transmission medium may be provided by way of include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), fieldprogrammable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

## Claims

1. A network management system comprising:
a memory; and
one or more processors in communication with the memory and configured to:
determine, based on data received from a plurality of network devices of a network, a network condition to perform a test, wherein the network condition comprises one or more of a time window to perform the test or one or more network devices of the plurality of network devices to perform the test;
instruct, based on the network condition, the one or more network devices to perform the test;
identify, based on data obtained from the one or more network devices that performed the test, an issue of the network; and
perform an action based on the identified issue.

2. The network management system of claim 1,
wherein to determine the time window to perform the test, the one or more processors are configured to determine, based the data indicative of client activity associated with each of the plurality of network devices over a period of time, a lull period indicative of low client activity or no client activity to perform the test; and
wherein to instruct the one or more network devices to perform the test, the one more processors are configured to instruct the one or more network devices to perform the test during the lull period.

3. The network management system of claim 2, wherein to determine the lull period, the one or more processors are configured to determine an average number of client devices actively connected to each of the plurality of network devices over the period of time.

4. The network management system of any of claims 2-3, wherein to determine the lull period, the one or more processors are configured to:
determine a plurality of periods of time at which there is low client activity or no client activity;
generate a score for each of the plurality of periods of time at which there is low client activity or no client activity; and
select the lull period based on the score for each of the plurality of periods of time at which there is low client activity or no client activity.

5. The network management system of any of claims 1-4,
wherein to determine the one or more network devices of the plurality of network devices to perform the test, the one or more processors are configured to determine an impact to the network when the one or more network devices perform the test, and
wherein to instruct the one or more network devices to perform the test, the one more processors are configured to instruct the one or more network devices to perform the test based on the determined impact to the network when the one or more network devices perform the test.

6. The network management system of claim 5, wherein to determine the impact to the network when the one or more network devices perform the test, the one or more processors are configured to:
generate a graph of a plurality of network devices; and
select the one or more network devices to perform the test from the graph of the plurality of network devices.

7. The network management system of claim 6, wherein the graph of the plurality of network devices comprises a graph representing one or more of: a network topology of the network, neighbor relationships of the plurality of network devices, or a mapping of wireless local area networks, WLANs, to virtual local area networks, VLANs, of the network.

8. The network management system of any of claims 6-7, wherein to select the one or more network devices to perform the test from the graph of the plurality of network devices, the one or more processors are configured to:
select a node from the graph of the plurality of network devices that represents one or more of: a network device of a group of network devices of overlapping paths in the network, a network device of a group of network devices having a strong neighbor relationship, or a device that provides maximum coverage of a wireless local area network and virtual local area network combination.

9. The network management system of any of claims 1-8, wherein the one or more processors are further configured to:
confirm a previously detected issue of the network with the identified issue of the network.

10. The network management system of any of claims 1-9, wherein to perform the action based on the identified issue, the one or more processors are configured to perform one or more of:
send a notification to an administrator of the network indicating the issue, send one or more recommended actions to remedy or prevent the issue, or automatically perform a corrective action to remedy or prevent the issue.

11. The network management system of any of claims 1-10,
wherein the test comprises a speed test, and
wherein to instruct, based on the network condition, the one or more network devices to perform the test, the one or more processors are configured to send a message to the one or more network devices to perform the speed test, wherein the message comprises one or more of configuration information for the one or more network devices to perform the speed test, a schedule to perform the speed test, or vendor-specific information for the one or more network devices to operate with a vendor that provides the speed test.

12. A method comprising:
determining, based on data received from a plurality of network devices of a network, a network condition to perform a test, wherein the network condition comprises one or more of a time window to perform the test or one or more network devices of the plurality of network devices to perform the test;
instructing, based on the network condition, the one or more network devices to perform the test;
identifying, based on data obtained from the one or more network devices that performed the test, an issue of the network; and
performing an action based on the identified issue.

13. The method of claim 12, further comprising steps corresponding to the functionality of the network management system of any of claims 2-11.

14. A computer-readable medium encoded with instructions that, when executed by one or more programmable processors, cause one or more of the programmable processors to become configured to perform the functionality of the network management system in any of claims 1-11.
